# DEMANDE DE BREVET EUROPEEN

(11) **EP 2 128 478 A1**
(43) Date de publication de la demande: **02.12.2009**
(21) Numéro de dépôt: 09161336.4
(22) Date de dépôt: 28.05.2009
(51) Int. Cl.: F16D 65/14, B60T 13/74, B60T 13/58

(54) **Système de freinage pour le contrôle de stabilité et de trajectoire d'un véhicule automobile et procédés d'utilisation d'un tel système**

(30) Priorité: 28.05.2008 FR 0853473
(71) Demandeur: Peugeot Citroën Automobiles SA, 78140 Vélizy Villacoublay (FR)
(72) Inventeur: Zink, Eric, 92700 Colombes (FR); Blanc, Fabrice, 38080 l'Isle d'Abeau (FR)

(57) **Abrégé**

La présente invention concerne essentiellement un système de freinage pour véhicule automobile, comprenant :
- au moins un circuit (35) d'admission et d'échappement de liquide de frein relié à un élément de frein (9, 32) situé au niveau des roues ;
- une pédale de frein (1) et un maître-cylindre (3) muni d'un réservoir (13) de liquide de frein relié à ladite pédale, ledit maître-cylindre étant apte à transformer l'appui sur la pédale (1) de frein en une pression hydraulique transmise à des éléments de frein (9, 32) comportant des moyens hydrauliques (15, 17, 19) pour transformer la pression hydraulique en un couple de freinage ;
- un système de régulation du freinage, commandé par une unité de contrôle électronique installée dans le véhicule pour générer, augmenter ou diminuer le couple de freinage de chacune des roues indépendamment de l'action sur la pédale de frein (1) quelque soit la vitesse d'évolution du véhicule.

Selon l'invention, le système de régulation du freinage comporte :
- des moyens hydrauliques pour réguler la pression du fluide de freinage ;
- un système d'étrier motorisé installé sur au moins une paire de roues comportant des moyens électriques (22, 27) pour réguler l'effort de freinage ;

lesdits moyens hydrauliques de régulation de la pression et ledit système d'étrier motorisé étant destinés à être mis en oeuvre de manière conjointe pour générer, augmenter ou diminuer le couple de freinage de chacune des roues.

## Description

La présente invention concerne un système de freinage mettant en oeuvre de manière conjointe des moyens de régulation de la pression du liquide de frein et un système d'étrier motorisé de régulation de l'effort de freinage pour le contrôle de stabilité et de trajectoire d'un véhicule automobile ainsi que les procédés d'utilisation de ce système de freinage associés. L'invention a notamment pour but de réduire le coût de fabrication d'un système de freinage à contrôle de stabilité et de trajectoire.

On connaît des systèmes de freinage qui visent à éviter le blocage des roues lorsqu'un conducteur freine trop brusquement, afin de maintenir une bonne adhérence des roues sur la chaussée en toutes circonstances, ce qui permet de conserver la directivité du véhicule et d'optimiser les distances de freinage. Le principe de fonctionnement d'un tel système connu plus généralement sous le nom ABS (Anti lock Bracking System) est d'utiliser des électrovannes et des pompes hydrauliques pour diminuer la pression de freinage appliquée sur une roue, dés lors qu'un risque de blocage de cette roue est détecté. Le système comprend en outre un capteur de vitesse de rotation installé sur chaque roue, une unité de commande électronique et deux électrovannes par roue pour permettre ce contrôle de pression.

On connaît également des systèmes électroniques de contrôle de stabilité du véhicule, plus généralement connus sous l'acronyme ESC pour "Electronic Stability Control ", dont l'objectif est d'appliquer de façon indépendante à chaque roue du véhicule un couple correcteur de freinage afin de contrôler la stabilité et la trajectoire du véhicule dans le cas d'une consigne de freinage du conducteur, inexistante, insuffisante ou au contraire trop importante, au regard du comportement dynamique du véhicule.

A cet effet, le système ESC comporte un dispositif de fourniture d'énergie, installé dans le système de freinage, permettant, en cas d'action insuffisante ou inexistante d'un conducteur sur la pédale de frein, de faire circuler du liquide de frein sous pression vers un ou plusieurs éléments de frein, de manière à freiner une ou plusieurs roues du véhicule indépendamment de l'action du conducteur sur la pédale de frein. Ce dispositif sera appelé système de régulation du freinage dans la suite de ce document.

Ce système de régulation du freinage est muni d'une pompe hydraulique, permettant, en cas d'action insuffisante ou inexistante d'un conducteur sur la pédale, de faire circuler du liquide de frein sous pression vers un ou plusieurs éléments de frein, de manière à freiner une ou plusieurs roues du véhicule indépendamment de l'action du conducteur sur la pédale de frein.

Généralement, un système ESC permet également la mise oeuvre du procédé ABS, car les éléments utilisés pour augmenter la pression de freinage sur chaque roue peuvent être utilisés, à l'inverse, pour diminuer cette pression, et ainsi permettre le déblocage d'une roue.

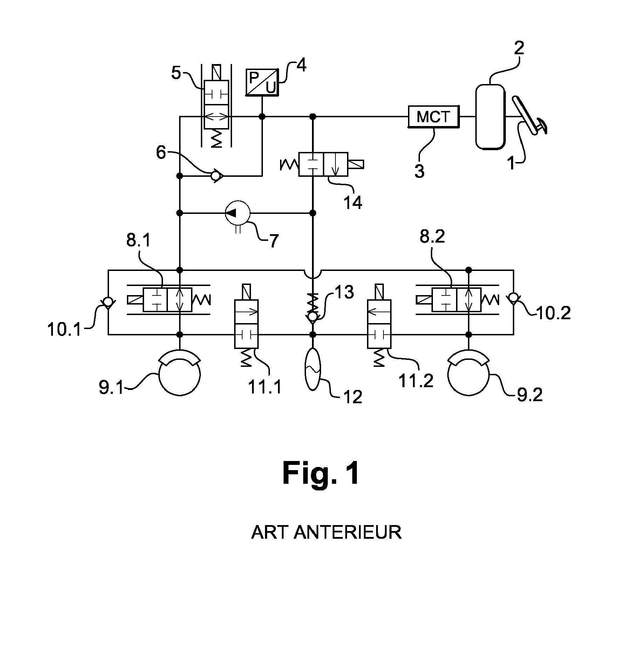

On a représenté sur la figure 1 les éléments essentiels pour le fonctionnement d'un système de freinage conforme à l'état de la technique du point de vue d'un seul des deux circuits de freinage, dans un véhicule automobile comportant une installation de freinage hydraulique à deux circuits de freinage, c'est-à-dire uniquement pour deux roues dont les freins sont reliés entre eux. En effet, les éléments essentiels pour le fonctionnement du système de freinage pour le deuxième circuit sont les mêmes.

Le système de freinage montré sur la figure 1 comprend les éléments suivants ;
- une pédale de frein 1, destinée à transmettre et amplifier l'effort exercé par le conducteur du véhicule lorsqu'il souhaite freiner ;
- un amplificateur d'effort de freinage 2 ;
- un maître-cylindre tandem 3, permettant de transformer l'effort amplifié par l'amplificateur et la pédale en pression hydraulique ;
- des étriers 9.1, 9.2 associés à des disques de frein pour transformer la pression hydraulique en couple de freinage de chacune des roues.

Il comprend en outre un ensemble d'éléments formant le système de régulation du freinage. Ces éléments, dont le fonctionnement sera décrit par la suite, sont les suivants :
- une électrovanne de pilotage normalement ouverte (5),
- une électrovanne d'aspiration normalement fermée (14),
- une pompe hydraulique (7),
- des clapets 6, 10.1, 10.2, permettant de n'autoriser le passage du fluide que dans un sens d'écoulement,
- un accumulateur basse pression 12, destiné à stocker du liquide pendant certaines phases de fonctionnement du système,
- au niveau de chaque étrier de frein, un circuit d'admission et/ou d'échappement, comportant deux électrovannes, l'une étant une électrovanne d'admission normalement ouverte 8.1, 8.2, et l'autre une électrovanne d'échappement normalement fermée 11.1, 11.2, ainsi qu'un clapet anti-retour 10.1, 10.2 monté en parallèle de chaque électrovanne d'admission 8.1, 8.2,
- un capteur de pression 4, et
- un ensemble de canalisations hydrauliques, non référencées, permettant de transporter le liquide entre les différents éléments du système.

Ce système de freinage comporte également une unité de contrôle électronique qui n'est pas représentée sur la figure 1 et qui permet de piloter les systèmes de freinage et notamment de mettre en oeuvre les procédés d'ABS et d'ESC en procédant de la manière suivante :
- collecter et traiter les mesures issues des différents capteurs de position, de vitesse, accélération ou pression installées dans le véhicule,
- communiquer avec le système de contrôle de moteur,
- contrôler et commander, à partir de ces mesures, les différents éléments du deuxième système de freinage, par exemple, de manière à mettre en oeuvre un procédé anti-blocage de roues ou un procédé de contrôle de trajectoire et de stabilité du véhicule,

On précise ici que, dans l'ensemble de la description qui suit, les électrovannes mises en oeuvre pourront être des électrovannes tout ou rien, ou des électrovannes proportionnelles. Une électrovanne tout ou rien est caractérisée par deux états, un état de repos (qui peut être ouvert ou fermé), et un état d'activation (qui est l'état contraire).

Une électrovanne proportionnelle comporte une infinité d'états entre un état de repos et un état d'activation complète, ce qui permet de procéder à une ouverture et une fermeture progressives.

On entend par le terme "électrovanne normalement ouvert (ou fermé)", l'électrovanne dans son état de repos ouvert (ou fermé).

Il peut également s'agir d'électrovanne « débit », c'est-à-dire permettant de contrôler un débit, ou d'électrovanne « pression », c'est-à-dire permettant de contrôler la différence de pressions appliquée à cette électrovanne.

Lors d'un freinage classique, dans lequel il n'est pas fait appel au système de régulation du freinage, toutes les électrovannes sont désactivées, c'est-à-dire qu'elles se trouvent dans leur position normale, et le fonctionnement est alors le suivant :
- lorsque le conducteur appuie sur la pédale 1, du liquide de frein sous pression est émis en sortie du maître-cylindre tandem 2,
- ce liquide traverse, d'une part, l'électrovanne de pilotage 5 ouverte, et d'autre part le clapet 6.
- le liquide est alors dirigé, via le réseau de canalisations hydrauliques, en direction des étriers 9.1, 9.2, via les électrovannes 8.1, 8.2,
- le liquide sous pression est ainsi introduit dans les étriers 9.1, 9.2, ce qui a pour conséquence le freinage de chacune des roues.

Lors d'un défreinage classique, c'est à dire lorsque le conducteur réduit ou cesse d'exercer un effort sur la pédale de frein 1, le liquide sous pression contenu dans les étriers 9.1, 9.2 est redirigé vers le maître-cylindre tandem 3, via les électrovannes 8.1, 8.2 et les clapets 10.1, 10.2 ainsi que l'électrovanne 5.

Lorsqu'un risque de blocage d'une roue est détecté, par exemple de la roue équipée de l'étrier 9.1, il convient de diminuer la pression dans cet étrier, afin de procéder au déblocage de cette roue. Un tel risque de blocage fait suite à une action de freinage trop importante par rapport aux conditions d'adhérence.

Pour effectuer cette diminution de pression, l'unité de contrôle électronique active les électrovannes d'admission 8.1, normalement ouverte, et d'échappement 11.1, normalement fermée, afin qu'elles deviennent respectivement fermée et ouverte.

En conséquence, le liquide sous pression contenu dans l'étrier 9.1, s'écoule, via l'électrovanne11.1, jusqu'à l'accumulateur basse pression 12.

Cet accumulateur basse pression permet de stocker de façon temporaire le fluide évacué par les électrovannes d'échappement 11.1 et 11.2 des étriers 9.1 et 9.2. Le clapet 13 installé entre l'accumulateur 12 et l'aspiration de la pompe 7, et autorisant l'écoulement du liquide de frein dans le sens accumulateur vers la pompe permet d'utiliser la pompe 7 pour vider et donc réduire la pression de l'accumulateur 12 en cas de besoin.

Dans le cas, au contraire, où le conducteur exerce un effort inexistant ou insuffisant sur la pédale de frein par rapport à la situation du véhicule, l'unité de contrôle électronique détecte que la pression maître-cylindre, mesurée par le capteur 4, est inférieure à la pression requise pour maintenir une bonne stabilité de ce véhicule. Dans ce cas, elle active l'électrovanne de pilotage 5, qui devient alors fermée, ce qui a pour effet d'isoler le maître-cylindre 3 du circuit de freinage. L'électrovanne d'aspiration 14, placée entre le maître-cylindre 3 et l'aspiration de la pompe hydraulique 7, est également activée et se retrouve alors dans l'état ouvert. La pompe 7 est ainsi reliée au maître-cylindre 3 et pourra prélever du fluide directement au niveau du maître-cylindre 2 ou de son réservoir.

L'unité de contrôle commande alors une activation de la pompe hydraulique 7, afin d'envoyer du liquide de frein sous pression en direction des électrovannes d'admission 8.1 et 8.2, qui sont commandées en fonction de la (ou des) roue(s) sur laquelle (lesquelles) il est nécessaire d'appliquer une pression de freinage.

Ainsi comme on vient de le voir dans l'exemple sur la figure 1, les éléments formant le système de régulation du freinage font appel à de nombreux composants hydrauliques dont l'intégration dans un bloc hydraulique peut s'avérer compliquée et coûteuse. Ces inconvénients empêchent l'installation de ce type de système de manière généralisée sur les véhicules produits par les constructeurs automobile à l'heure actuelle.

La présente invention vise donc à fournir un système de freinage permettant la mise en oeuvre d'un procédé de contrôle de stabilité, qui soit moins coûteux et plus simple à installer tout en préservant l'efficacité du système pour remédier aux pertes de stabilité pouvant survenir dans un véhicule.

Le concept principal de l'invention est de simplifier le bloc hydraulique du système de gestion du freinage, en partant de l'idée de supprimer ou remplacer certains composants hydrauliques par des éléments moins coûteux tout en remplissant la même fonction. Parmi les différents éléments compris dans les systèmes existants, les électrovannes qui sont au nombre total de 12 (6 par circuit) représentent une partie coûteuse du bloc hydraulique.

En conséquence, l'invention part de l'idée que la suppression d'une partie des électrovannes, en particulier les électrovannes d'aspiration permettrait de diminuer les coûts de ces systèmes, et ainsi de les installer en série sur de nombreux véhicules.

En outre, la pompe hydraulique est identifiée comme l'un des composants les plus coûteux, son utilisation lors des phases ABS impose une augmentation de la durée potentielle d'utilisation de la pompe. L'autre idée principale de l'invention est donc de fournir un système de freinage qui ne nécessite pas l'activation de la pompe lors de la phase ABS. La pompe est donc moins sollicitée et le contrôle simplifié.

Le rôle de l'électrovanne d'aspiration qui est une électrovanne normalement fermé, placée entre le maître-cylindre et l'aspiration de la pompe hydraulique est de permettre lorsqu'elle est activée, par exemple dans un mode de gestion du freinage mettant en oeuvre un procédé ESC, à la pompe de prélever du fluide au niveau du maître-cylindre.

L'invention vise donc à fournir un système de freinage muni d'un système de régulation du freinage pour le contrôle de stabilité et de trajectoire, dans lequel le prélèvement du fluide est assuré directement par une liaison hydraulique moins couteuse qu'une électrovanne.

L'invention vise également à réduire les exigences sur la pompe en mettant en oeuvre des étriers motorisés qui sont utilisés de manière conjointe avec les éléments de régulation de la pression du liquide de frein pour le contrôle de stabilité et de trajectoire du véhicule.

A cet effet, l'invention concerne un système de freinage pour véhicule automobile, comprenant :
- au moins un circuit d'admission et d'échappement de liquide de frein relié à un élément de frein situé au niveau des roues ;
- une pédale de frein et un maître-cylindre muni d'un réservoir de liquide de frein relié à ladite pédale, le maître-cylindre étant apte à transformer l'appui sur la pédale de frein en une pression hydraulique transmise à des éléments de frein comportant des moyens hydrauliques pour transformer la pression hydraulique en un couple de freinage ;
- un système de régulation du freinage, commandé par une unité de contrôle électronique installée dans le véhicule pour générer, augmenter ou diminuer le couple de freinage de chacune des roues indépendamment de l'action sur la pédale quelque soit la vitesse d'évolution du véhicule.

Selon l'invention, le système de régulation du freinage comporte :
- des moyens hydrauliques pour réguler la pression du fluide de freinage ;
- un système d'étrier motorisé installé sur au moins une paire de roues comportant des moyens électriques pour réguler l'effort de freinage ; lesdits moyens hydrauliques de régulation de la pression et ledit système d'étrier motorisé étant destinés à être mis en oeuvre de manière conjointe pour générer, augmenter ou diminuer le couple de freinage de chacune des roues.

Selon une réalisation de l'invention, lesdits moyens hydrauliques pour réguler la pression comportent :
- une pompe hydraulique, comportant une entrée de liquide de frein reliée directement au maître cylindre permettant de prélever du liquide de frein lors de son activation et une sortie de liquide de frein reliée au circuit d'admission et d'échappement ;
- une électrovanne de pilotage normalement ouverte connectée entre le maître-cylindre et le circuit d'admission et d'échappement de liquide de frein ;
- des électrovannes d'admission normalement ouvertes, connectées entre le maître-cylindre et les éléments de frein,
- des clapets montés en parallèle des électrovannes d'admission normalement ouvertes connectées entre le maître-cylindre et les éléments de frein comportant uniquement des moyens hydraulique, lesdits clapets autorisant le passage du fluide uniquement des éléments de frein vers le maitre-cylindre ;
- un accumulateur basse pression redimensionné connecté entre l'électrovanne d'échappement normalement fermée et le maître-cylindre,

Comme on vient de définir l'invention ci-dessus, en vue de la simplification et de la réduction du coût de l'installation du système de freinage, on a supprimé dans le bloc hydraulique l'électrovanne d'aspiration qui relie dans les systèmes de freinage existant le maître-cylindre à l'aspiration de la pompe. Elle est remplacée par une liaison hydraulique qui permet à la pompe de prélever du fluide au niveau du maître-cylindre lors de l'activation du système de régulation du freinage mettant en oeuvre, par exemple, un procédé ESC.

Dans une forme de réalisation avantageuse de l'invention, les moyens de récupération du liquide de frein comportent une liaison entre la sortie du circuit d'échappement et un accumulateur basse pression, permettant un stockage temporaire de ce liquide de frein dans l'accumulateur lors de certaines phases de freinage.

De préférence, dans cet accumulateur basse pression, le liquide est stocké sous une pression de l'ordre de 0 à 20 bars.

Avantageusement, cet accumulateur est dimensionné en terme de volume et de raideur de sorte qu'il permet de stocker tout le volume de liquide de frein à la sortie du circuit d'échappement lors des phases de réduction de pression.

En particulier, cette forme du système selon l'invention se distingue de l'état de la technique en ce qu'il ne met pas en oeuvre la pompe hydraulique lors des phases de réduction de la pression dans un ou plusieurs éléments de frein (par exemple, lors de la phase de déblocage des roues). Aussi, il est nécessaire d'utiliser un accumulateur basse pression de plus grande capacité, et donc de plus grande taille, que les accumulateurs utilisés dans les systèmes existants.

Selon une réalisation, le système d'étrier motorisé comporte un corps solidaire d'une plaquette de frein et au moins une chambre remplie de fluide hydraulique, un piston hydraulique creux étant installé à l'intérieur de ladite chambre, un système à piston électrique étant installé à l'intérieur du creux du piston, ce système de piston électrique comportant un piston électrique associé à un moteur électrique, une extrémité du piston électrique étant positionnée en regard d'une deuxième plaquette, les deux plaquettes étant positionnées de part et d'autre d'un disque associé à une roue du véhicule.

Selon une réalisation, le système d'étrier motorisé comporte un corps présentant au moins deux chambres ménagées de part et d'autre d'un disque associé à une roue du véhicule, un piston hydraulique étant installé dans une des chambres remplie de fluide hydraulique, une extrémité de ce piston hydraulique étant positionnée en regard d'une première plaquette, un système à piston électriques comportant un piston électrique associé à un moteur électrique étant installé à l'intérieur de l'autre chambre, une extrémité du piston électrique étant positionnée en regard d'une deuxième plaquette, les deux plaquettes étant positionnées de part et d'autre du disque.

Selon une réalisation, le système de freinage comporte en outre des clapets montés en parallèle des électrovannes d'admission normalement ouvertes connectées entre le maître-cylindre et les éléments de frein muni d'un système d'étrier motorisé, le système d'étrier motorisé comportant un corps solidaire d'une première plaquette, ce corps présentant au moins une chambre remplie de fluide hydraulique à l'intérieur de laquelle est disposé un piston hydraulique creux, ce piston hydraulique présentant une extrémité positionnée en regard d'une deuxième plaquette, un système à piston électrique étant installé à l'intérieur du creux du piston, ce système à piston électrique comportant une noix coopérant avec une tige hélicoïdale entraînée en rotation par un moteur électrique, la noix étant apte à éloigner ou approcher le piston hydraulique du disque disposé entre les plaquettes.

Selon une réalisation, l'électrovanne de pilotage normale ouverte est interposée entre le maître-cylindre et l'entrée du circuit d'admission, de sorte que lors du freinage et du défreinage, le liquide de frein traverse un même circuit.

En vue d'optimiser le circuit de freinage, la présente invention propose une autre forme de réalisation particulièrement avantageuse dans laquelle le circuit de défreinage est distinct du circuit de freinage. Pour cela, elle propose d'interposer l'électrovanne de pilotage normalement ouverte entre le maître cylindre et des clapets anti-retour du circuit d'admission de sorte que le liquide de frein traverse les électrovannes d'admission uniquement lors de la mise sous pression des étriers, c'est-à-dire lors de la phase de freinage.

En effet, l'expression des pertes de charge singulières causées par exemple par la géométrie des usinages lors de la fabrication du bloc hydraulique contenant la pompe, les électrovannes, les clapets et les accumulateurs peuvent dépendre du sens d'écoulement du fluide. Il est donc nécessaire de trouver un compromis pour les éléments lorsque le fluide traverse dans les deux sens. Ainsi, il est possible d'optimiser la géométrie des éléments en adoptant une architecture dans laquelle le fluide circule toujours dans le même sens.

Selon une autre réalisation, le système de freinage comporte en outre des clapets montés en amont des électrovannes normalement ouvertes connectées au système d'étrier motorisé, l'électrovanne de pilotage étant alors interposé entre le maître-cylindre et lesdits clapets de sorte que le liquide de frein ne traverse pas le même circuit lors de la phase de freinage et de défreinage de manière à former un circuit de défreinage distinct du circuit de freinage.

L'invention concerne également un procédé d'utilisation du système de freinage tel que décrit ci-dessus, **caractérisé en ce que** on utilise de manière conjointe les moyens hydrauliques de régulation des pression et le système d'étrier motorisé pour créer, augmenter ou diminuer le couple de freinage de chacune des roues indépendamment de l'action sur la pédale de frein quelle que soit la vitesse d'évolution du véhicule.

D'autres caractéristiques et avantages de l'invention seront apparents à la lecture de la description qui suit et à l'examen des figures qui l'accompagne. Ces figures ne sont données qu'à titre illustratif mais nullement limitatif de l'invention. Elles montrent :
Figure 1: une représentation schématique d'un système de freinage de l'art antérieur;
Figure 2: une représentation schématique d'un système de freinage selon l'invention comportant un bloc hydraulique pour réguler la pression du liquide de frein simplifié et un élément de frein motorisé pour réguler l'effort de freinage ;
Figure 3 et 4: des représentations schématiques d'un système d'étrier motorisé utilisé avec un système de freinage selon l'invention sans clapets monté en parallèle des électrovannes d'admission ;
Figure 5 : une représentation schématique d'un système d'étrier motorisé utilisé avec un système de freinage selon l'invention comprenant un clapet monté en parallèle de chaque électrovanne d'admission ;
Figure 6 : une représentation schématique d'une variante de réalisation du système de freinage de l'invention comportant un circuit de défreinage distinct du circuit de freinage ;
Figures 7a et Figure 7b : représentation schématique d'un système de freinage selon l'invention dans le care d'une architecture du circuit de freinage en X;
Figure 8a et Figure 8b : représentation schématique d'un système de freinage selon l'invention dans le cadre d'une architecture du circuit de freinage en L.

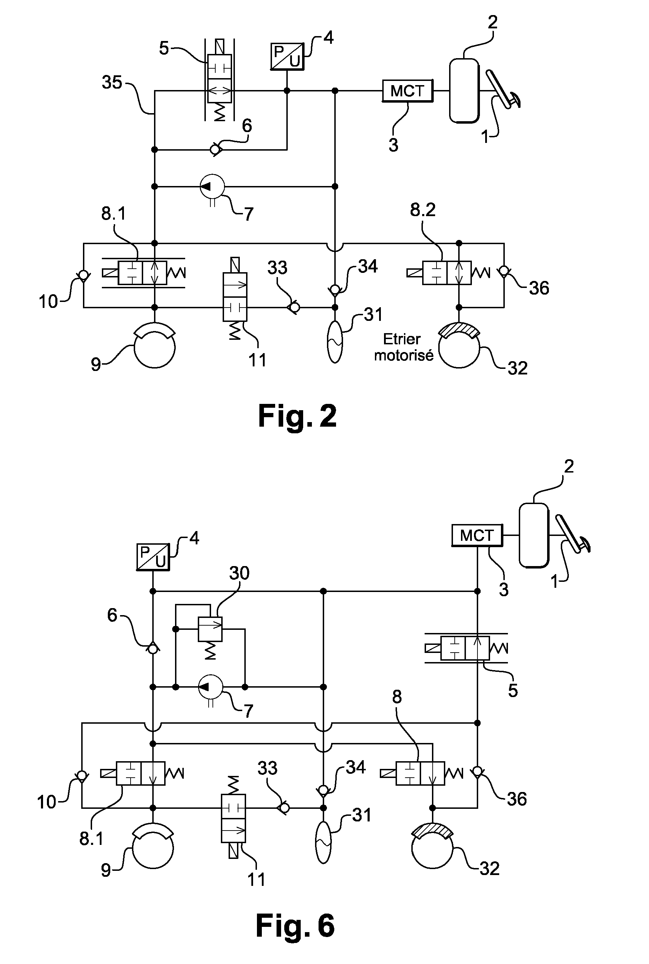

La figure 2 montre la configuration d'un système de freinage selon l'invention. Ce système de freinage comprend une pédale de frein 1 destinée à être pressée par le conducteur du véhicule lorsqu'il souhaite freiner. Cette pédale 1 est reliée à un amplificateur 2 qui permet d'amplifier l'effort de freinage du conducteur.

Cet amplificateur est relié en entrée d'un maître-cylindre 3 assurant la transformation de l'effort exercé par le conducteur sur la pédale 1 puis amplifié par l'amplificateur en pression hydraulique.

Cette pression hydraulique est transmise via des circuits d'admission et d'échappement à des éléments de freins conventionnels 9 et à des éléments de frein muni de systèmes d'étrier motorisé 32 assurant la transformation de la pression hydraulique en couple de freinage de chacune des roues, ce qui permet le freinage du véhicule.

En outre, le système de freinage comporte un système de gestion du freinage qui permet de générer, réduire ou augmenter le couple de freinage de chacune des roues indépendamment de l'appui sur la pédale 1 par le conducteur.

Pour cela, ce système de gestion du freinage comporte des moyens hydrauliques de régulation de la pression hydraulique exercée sur les éléments de frein et un système d'étrier motorisé installé sur au moins une paire des roues du véhicule permettant d'agir sur l'effort de freinage. Le système d'étrier motorisé et les moyens hydrauliques de régulation de la pression du fluide de frein sont utilisés de manière conjointe pour agir sur le couple de freinage.

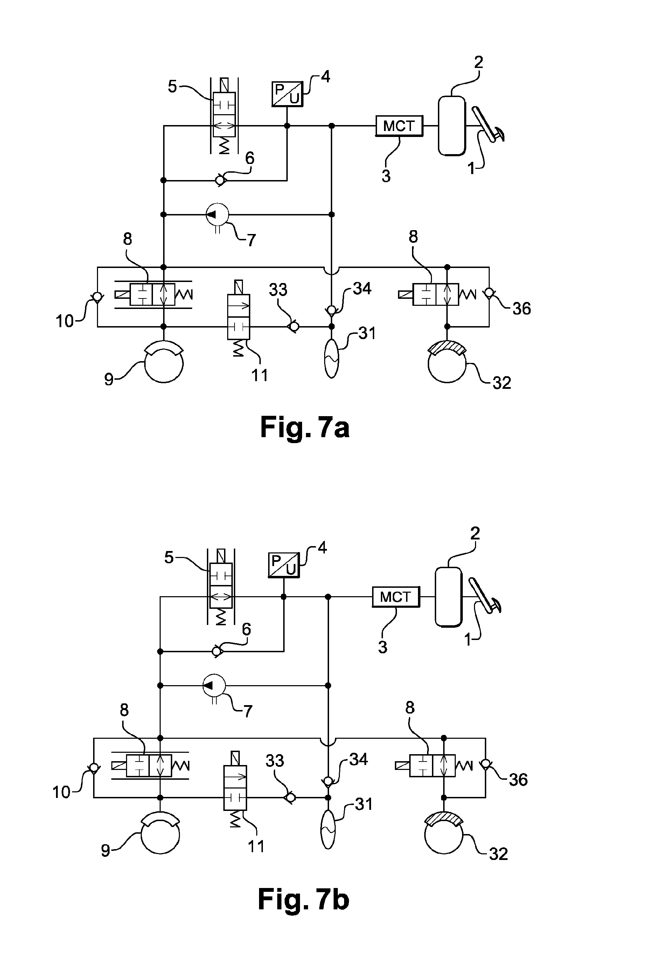

A cet effet, la figure 2 représentant une architecture du circuit de freinage en X d'un système de freinage de l'invention selon le point de vue d'un seul des deux circuits hydrauliques dans lequel le maître-cylindre 3 est relié à un élément de frein comportant des moyens hydrauliques 9 (étrier conventionnel) et à un élément de frein comportant un système d'étrier motorisé 32, le deuxième circuit n'étant pas représenté. Cette architecture n'est pas la plus optimale en terme de coût, car elle nécessite l'utilisation d'une pompe par circuit (Figure 7a et Figure 7b).

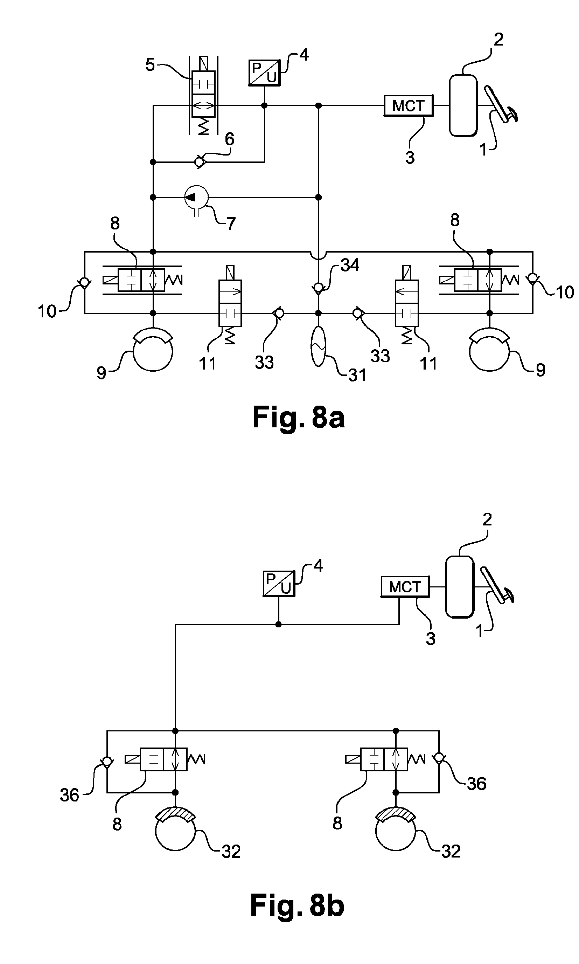

De manière générale, le système d'étrier motorisé peut être installé à l'arrière ou à l'avant, les étriers conventionnels se retrouvant placés soit à l'avant soit à l'arrière. Aussi une architecture de freinage en L est envisageable dans laquelle le circuit primaire (Figure 8a) comporte uniquement des étriers conventionnels et le circuit secondaire (Figure 8b) des étriers motorisés. Dans cette architecture, il n'est pas nécessaire d'installer une pompe dans le circuit secondaire ou d'utiliser éventuellement une petite pompe destinée uniquement à mettre en pression les étriers motorisés.

Les moyens hydrauliques pour réguler la pression du liquide de frein comportent :
- une pompe hydraulique 7, comportant une entrée 701 de liquide de frein reliée directement au maître-cylindre 3 permettant de prélever du liquide de frein lors de son activation et une sortie de liquide de frein 702 reliée au circuit d'admission de liquide de frein ;
- des électrovannes d'admission 8.1, 8.2 normalement ouvertes, connectées entre le maître-cylindre et les éléments de frein ;
- des clapets 10, 36 montés en parallèle des électrovannes d'admission 8.1, 8.2 autorisant le passage du fluide uniquement des éléments de frein vers le maître-cylindre;
- un accumulateur basse pression redimensionné 31 connectée entre l'électrovanne d'échappement 11 normalement fermée et le maître-cylindre via un clapet 34, permettant un stockage temporaire du liquide de frein.

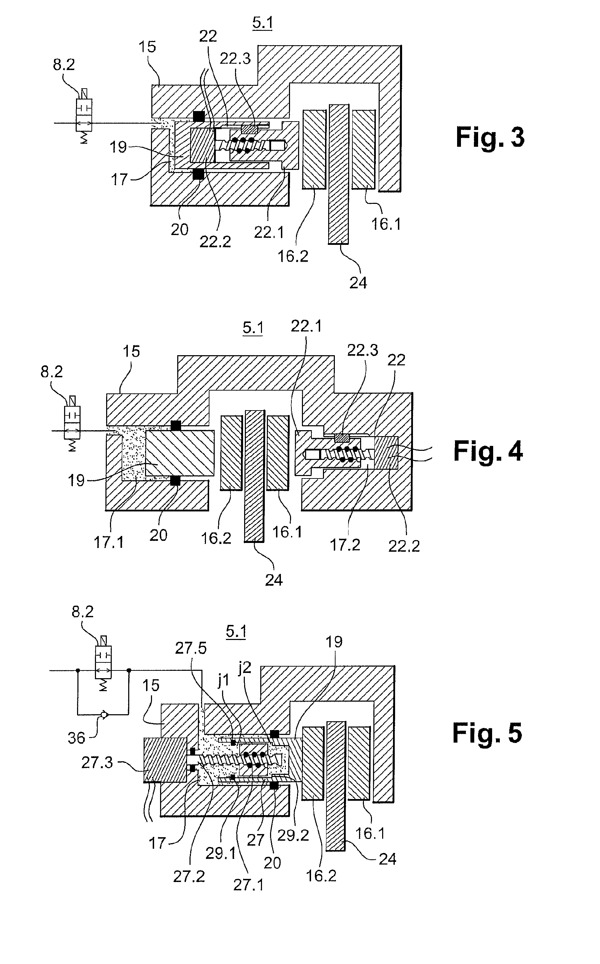

Comme représente sur les figures 3 à 5 et selon le principe utilisé dans les différents types d'étriers rencontrés sur les véhicules automobiles, l'élément de frein conventionnel 9 permet de générer un couple de freinage au niveau de la roue en pressant des plaquettes de frein 16.1, 16.2 contre un disque de frein 24, ces plaquettes étant disposées de part et d'autre du disque 24.

L'élément de frein 9 comprend un corps 15 solidaire d'une plaquette de frein 16.1. Ce corps 15 comporte au moins une chambre hydraulique 17 remplie de fluide hydraulique. Le volume de la chambre 17 peut varier suite au déplacement d'un piston 19 délimitant cette chambre.

L'étanchéité de la chambre 17 est assurée au moyen d'un joint 20 qui peut être monté dans une gorge ménagée dans la paroi interne de la chambre 17 et serré sur le piston 19 ou au contraire monté dans une gorge ménagée à la surface du piston 19 et serré contre la paroi interne de la chambre 17.

Pour permettre le freinage et assurer le rattrapage d'usure des plaquettes 16.1, 16.2, il existe un déplacement relatif entre le corps 15 de l'élément de frein 9 et le disque de frein 24. Pour ce faire, le disque de frein peut être en liaison glissière avec l'axe de rotation de la roue (type « disque flottant ») ou bien le corps 15 peut être en liaison glissière par rapport au reste du véhicule au moyen d'une chape non représentée sur les figures (type « étrier flottant »).

Les figures 3 à 4 montrent une représentation schématique d'un élément de frein 14 à disque muni d'un système d'étrier motorisé, utilisé avec un système de freinage 1 selon l'invention dépourvu de clapet 36 monté en parallèle de l'électrovanne d'admission 8.2.

Comme représenté sur la figure 3, le piston hydraulique 19 est creux et comporte un système de piston électrique 22. Ce système est composé d'un piston 22.1 dont une extrémité est en contact avec une plaquette de frein 16.1 et d'un moteur électrique 22.2. Un système de blocage du mouvement de rotation du piston électrique 22.1 autour de l'axe du moteur électrique 22.2, par exemple constitué d'une clavette 22.3 montée dans le piston électrique 22.1 et pouvant coulisser dans une rainure ménagée dans le piston hydraulique 19 permet de n'autoriser qu'un mouvement de translation du piston électrique 22.1 par rapport au piston hydraulique 19 lorsque le moteur électrique 22.2 est activé, le piston électrique 22.1 étant bloqué dans sa position lorsque le moteur 22.2 n'est pas actionné.

La rotation du piston 19 autour de l'axe du moteur 22.2 est empêchée par le couple de frottements généré par le joint 20 ou par un dispositif de blocage similaire non représenté.

Ainsi, lorsqu'on établit la pression dans le circuit hydraulique, le piston hydraulique 19 presse, via le piston électrique 22.1, la plaquette 16.2 sur le disque 24. En se déplaçant, le piston hydraulique 19 déforme le joint 20. Par ailleurs, suite à la force de réaction due à la pression, le corps de l'étrier 15 ou le disque 24 se déplace en translation de manière à plaquer la plaquette 16.1 contre le disque 24. Lors du défreinage, lorsque la pression hydraulique diminue dans le circuit hydraulique, le joint 20, en reprenant sa forme initiale, rappelle le piston 19 dans sa position initiale. L'usure des plaquettes est compensée par un glissement du piston 19 vis-à-vis du joint 20, le piston 19 ne revenant pas exactement à sa position initiale dans ce cas-là.

Le couple de freinage pourra être modulé grâce à l'action conjointe du système à piston électrique 22 et de l'électrovanne d'admission 8.2 indépendamment de la pression générée dans le circuit hydraulique. En effet, une fois la chambre 17 isolé, le couple de freinage peut être augmenté lorsque le piston électrique 22.1 est pressé contre la plaquette 16.2 afin de diminuer le volume de la chambre 17 (d'où une augmentation de la pression et donc de l'effort de serrage), ou diminué lorsque le piston 22.1 est éloigné de la plaquette 16.2 afin d'augmenter le volume de la chambre 17 (d'où une diminution de la pression et donc de l'effort de serrage).

Dans la variante de la figure 4, l'élément de frein muni d'un système d'étrier motorisé 32 comporte un corps 15 présentant deux chambres 17.1, 17.2 ménagées de part et d'autre d'un disque 24 associé à une roue du véhicule, la chambre 17.1 étant identique à la chambre 17 décrite précédemment.

Dans cette variante, le piston hydraulique 19 est plein et un système de piston électrique 22 identique à celui décrit précédemment est situé dans la chambre 17.2.

Ainsi, lorsqu'on établit la pression dans le circuit hydraulique, le piston hydraulique 19 presse la plaquette 16.2 sur le disque 24. Par ailleurs, suite à la force de réaction due à la pression, le corps de l'étrier 15 ou le disque 24 se déplace en translation de manière à plaquer la plaquette 16.1 contre le disque 24 via le système de piston électrique 22. En se déplaçant, le piston 19 déforme le joint 20. Lors du défreinage, lorsque la pression hydraulique diminue, le joint 20, en reprenant sa forme initiale, rappelle le piston 19 dans sa position initiale. L'usure des plaquettes est compensée par un glissement du piston 19 vis-à-vis du joint 20, le piston 19 ne revenant pas exactement à sa position initiale dans ce cas-là.

Comme pour la réalisation de la figure 3, le couple de freinage peut être modulé grâce à l'action conjointe du système de piston électrique 22 et de l'électrovanne d'isolement 8.2 indépendamment de la pression générée dans le circuit hydraulique. En effet, une fois la chambre 17 isolé, le couple de freinage pourra être augmenté en approchant le piston électrique 22.1 contre la plaquette 16.1 afin de diminuer le volume de la chambre 17, ou diminué en éloignant le piston 22.1 de la plaquette 16.1 afin d'augmenter le volume de la chambre 17.

La figure 5 montre une représentation schématique d'un élément de frein muni d'un système d'étrier motorisé 32 utilisé avec un système de freinage selon l'invention comportant un clapet anti-retour 36 monté en parallèle de l'électrovanne d'admission 8.2.

Dans cette variante de réalisation, le piston 19 est creux et le moteur électrique 27.3 d'un système de piston électrique 27 se trouve à l'extérieur du corps 15 de l'élément de frein 5.1. Un joint 27.4 permet de compléter l'étanchéité de la chambre 17. Ce système de piston électrique 27 comprend une noix 27.1 située à l'intérieur du piston creux 19. Un système de blocage du mouvement de rotation de la noix 27.1, non représenté sur la figure, n'autorise qu'un mouvement de translation de la noix 27.1 lorsque la tige 27.2 hélicoïdale est entraînée en rotation par le moteur 27.3. Le système de piston électrique 27 est de type irréversible. Cette irréversibilité peut-être obtenue grâce à l'utilisation d'un moteur freiné ou d'un couple vis 27.2 / noix 27.3 irréversible.

Par ailleurs, un élément démontable 27.5 qui peut être un circlips est installé dans une gorge réalisée à l'intérieur du piston 19. Cet élément 27.5 permet de réaliser un épaulement 29.1. Un deuxième épaulement 29.2 est quant à lui ménagé directement à l'intérieur du piston 19 du côté de la plaquette 16.2. L'élément 27.5 est démontable afin de pouvoir monter la noix 27.1 entre les deux épaulements 29.1, 29.2, cette noix 27.1 étant destinée à entrer en butée contre ces deux épaulements 29.1, 29.2.

Les jeux j1 et j2 entre la noix 27.1 et les épaulements 29.1, 29.2 sont définis pour permettre un fonctionnement sans que le système électrique 27 n'interfère avec le fonctionnement purement hydraulique du système de freinage.

Ainsi, le jeu j1 entre la noix 27.1 et l'épaulement 29.1 correspond à la course maximale du piston 19 hydraulique lors d'un freinage sans action électrique. Le jeu j2 entre la noix 27.1 et l'épaulement 29.2 garantit qu'il n'y aura pas d'effort de freinage résiduel suite à la création ou à l'augmentation d'un couple de freinage grâce au système électrique (utilisation de la fonction frein de parking électrique par exemple).

Ainsi, lorsqu'on établit la pression dans le circuit hydraulique, le piston hydraulique 19 se déplace en translation par rapport au piston 27 vers le disque 24 et presse la plaquette 16.2 sur le disque 24. Par ailleurs, suite à la force de réaction due à la pression, le corps de l'étrier 15 ou le disque 24 se déplace en translation de manière à plaquer la plaquette 16.1 contre le disque 24. En se déplaçant, le piston hydraulique 19 déforme le joint 20. Lorsque la pression hydraulique diminue dans le circuit hydraulique, le joint 20, en reprenant sa forme initiale, rappelle le piston 19 dans sa position initiale. L'usure des plaquettes est compensée par un glissement du piston 19 vis-à-vis du joint 20, le piston 19 ne revenant pas exactement à sa position initiale dans ce cas-là.

Le couple de freinage peut être modulé grâce à l'action conjointe du système 27 à piston électrique et de l'électrovanne d'admission 8.2 indépendamment de la pression générée dans le circuit hydraulique. En effet, le couple de freinage peut être augmenté lorsque la noix 27.1 est pressée par le moteur contre l'épaulement 29.2 de manière à augmenter l'effort presseur du piston 19 contre la plaquette 16.2 ou diminué lorsque la noix 27.1 est pressée contre l'épaulement 29.1 de manière à diminuer l'effort presseur du piston 19 contre la plaquette 16.2.

On détaille maintenant le fonctionnement du système de freinage selon l'invention dans différentes phases de freinage.

Dans les phases de freinage et de défreinage classique (sans actionnement des moyens de régulation de la pression hydraulique ni des systèmes 22, 27 à piston électrique des éléments de frein motorisé), ces phases de freinage et de défreinage sont mises en oeuvre de manière similaire aux systèmes existants dans l'état de la technique.

Lorsque le conducteur appuie sur la pédale 1, l'amplificateur d'effort de freinage 2 augmente cet effort qui est transmis au maître cylindre 3. La pression générée par le maître cylindre 3 est transmise par le clapet 6 et l'électrovanne normalement ouverte 5, puis par les électrovannes d'admission normalement ouvertes 8.1, 8.2 aux éléments de frein conventionnel et motorisé 9, 32 installés respectivement sur les roues du véhicule. Il n'y a aucun problème pour que les étriers montent en pression puisque le système à piston électrique 22, 27 est irréversible.

Lorsque le conducteur relâche réduit ou cesse d'exercer un effort sur la pédale 1 pour réaliser un défreinage, le liquide de frein contenu sous pression dans les étriers des éléments de frein 9, 32 retourne au maître cylindre 3 à travers les clapets 10, 15 (pour les systèmes qui en sont munis) et les électrovannes normalement ouvertes 8.1, 8.2 et l'électrovanne normalement ouverte 5.

Le système montré sur la figure 2 permet, en outre, la mise en oeuvre de fonctionnalités anti-blocage, permettant de relâcher la pression sur un ou plusieurs étriers de frein lorsqu'un risque de blocage de roue est détecté par l'unité de contrôle électronique.

Ainsi, lorsqu'il est nécessaire de faire chuter par exemple la pression dans l'étrier de l'élément de frein conventionnel 9, l'électrovanne normalement ouverte d'admission 8.1 et l'électrovanne d'échappement normalement fermée 11 sont activées (l'activation peut ne pas être simultanée ni totale). Le fluide s'écoule via le clapet 33 jusqu'à l'accumulateur basse pression 31. La pression de cet accumulateur peut être inférieure à la pression du maître-cylindre car le clapet 34 n'autorise l'écoulement que dans le sens de l'accumulateur vers le reste du circuit.

Avantageusement les caractéristiques de l'accumulateur basse pression, par exemple son volume et/ou la raideur du ressort utilisé, sont choisies de façon à pouvoir stocker tout le volume de fluide qui sera évacué de l'étrier 9 par l'électrovanne d'échappement 11 durant la phase de régulation, tout en ayant une élévation de pression relativement faible.

L'accumulateur basse pression 31 peut être avantageusement vidé par l'intermédiaire du clapet 34 lorsqu'en cours du défreinage la pression du maître-cylindre 3 est devenue inférieure à la pression de l'accumulateur basse pression 31.

Lorsqu'il n'est nécessaire de faire chuter l'effort de serrage au niveau d'une roue équipé d'un système d'étrier motorisé 32, l'électrovanne 8.2 est activée de manière à passer en position fermée. On isole ainsi l'élément de frein 32 du circuit de freinage, afin que la pression à l'intérieur de la chambre 17 ne puisse plus augmenter. La pression de la roue est donc maintenue constante tant que l'électrovanne 8.2 est activée. Si la pression est encore trop élevée, le système d'étrier motorisé est activé.

Dans le cas du fonctionnement du système de freinage selon l'invention dépourvu de clapet 36 pour l'élément de frein muni d'un système d'étrier motorisé selon la figure 4, le système 22 à piston électrique est activé de manière éloigner le piston 22.1 de la plaquette 16.1, en le déplaçant. Cet éloignement du piston 22.1 de la plaquette 16.1 engendre une augmentation du volume de la chambre hydraulique 17.1 et par conséquent une diminution de la pression à l'intérieur de la chambre 17.1 et donc de l'effort de serrage du disque 24.

Le fonctionnement du système de freinage selon l'invention dans les phases de diminution du couple de freinage est identique pour l'élément de frein muni d'un système d'étrier motorisé selon la figure 3, l'éloignement de la tête du piston 22.1 de la plaquette 16.2 engendrant une augmentation du volume de la chambre 17 et donc une diminution de la pression hydraulique à l'intérieur de cette chambre 17.

Dans le cas du fonctionnement du système de freinage selon l'invention muni de clapet 36 pour l'élément de frein muni d'un système d'étrier motorisé selon la figure 5, le système 27 est actionné, de sorte que la noix 27.1 est déplacée dans la direction opposée au disque 24 jusqu'à entrer en appui contre l'épaulement 29.1 et exercer un effort sur le piston hydraulique 19 s'opposant à l'effort exercé par la pression hydraulique sur le piston 19. L'effort de serrage des plaquettes 16.1, 16.2 contre le disque 24 est alors diminué. Si l'effort exercé par le système électrique devient supérieur à l'effort dû à la pression hydraulique, le piston 19 se déplace en s'éloignant du disque 24, cet éloignement du piston 19 du disque 24 engendrant un retour du fluide via le clapet 36 vers le maître cylindre.

Le système de la figure 2 permet également de mettre en oeuvre le fonctionnement du système de freinage selon l'invention pour générer ou augmenter le couple de freinage généré par un élément de frein indépendamment de l'action du conducteur sur la pédale de frein 1 par exemple au cours d'une phase ESC ou ASR.

Ainsi lorsque la pression à la sortie du maître cylindre mesurée par le capteur de pression 4 est inférieure à la pression requise, l'électrovanne normalement ouverte 5 est activée et devient alors fermée. Le maître cylindre est ainsi isolé du circuit de freinage. La pompe 7 qui est reliée directement au maître cylindre par la liaison 701 prélève du fluide directement au niveau du maître cylindre 3. Elle est ensuite activée pour générer une pression requise. Cette pression peut être modulée par l'électrovanne 5 ou par les électrovannes d'admission 8.1, 8.2 ou bien encore par une commande spécifique de la pompe.

Si le conducteur appuie finalement sur la pédale de frein 1, la pression résultante de cette action peut être transmise aux étriers des roues 9, 32 si elle est supérieure à la pression générée par la pompe 7 par l'intermédiaire du clapet 6.

Avantageusement, dans cette forme de réalisation de l'invention, l'électrovanne 5 peut aussi jouer le rôle de limiteur de pression et protéger ainsi le circuit hydraulique et la pompe des surpressions lorsque celle-ci est activée en même temps que les électrovannes d'admission 8.1, 8.2.

Selon le système de freinage de l'invention, avantageusement il est possible de profiter du système d'étrier motorisé pour assurer l'effort de freinage des roues qui en sont équipées. Dans ce cas, la pompe n'assure que la mise en pression de l'étrier conventionnel 9, permettant ainsi l'utilisation d'une pompe plus petite.

Pour agir sur l'effort de freinage de la roue équipé d'un étrier motorisé selon la figure 4, on active l'électrovanne d'admission 8.2 de manière à passer en position fermée, ce qui permet d'isoler la chambre 17.1 de l'élément de frein 32 du circuit de freinage. Le piston électrique est activé de manière à presser le piston hydraulique 22.1 contre la plaquette 16.1. Ce déplacement du piston 22.1 engendre une diminution du volume de la chambre hydraulique 17.1 et par conséquent une augmentation ou une création de pression à l'intérieur de la chambre 17.1 et donc de l'effort de serrage du disque 24.

Dans le cas où l'élément de frein motorisé est muni d'un système d'étrier motorisé selon la figure 3, le déplacement du piston 22.1 contre la plaquette 16.2 engendrant une diminution du volume de la chambre 17 et donc une augmentation de la pression à l'intérieur de cette chambre 17.

Si le conducteur appuie finalement sur la pédale de frein 2 et que la pression mesurée par le capteur 4 est supérieure à la pression équivalente générée par le piston 19, l'électrovanne 8.2 d'isolement est désactivée tout comme le moteur électrique 22.2.

Cette phase de fonctionnement justifie la suppression du clapet 36. En effet, si le clapet 36 avait été conservé, ils auraient permis au fluide de retourner au maître-cylindre 3 lors de l'activation du piston 22 électrique. Il n'aurait donc pas été possible de générer une pression dans la chambre 17.1 et il n'y aurait pas eu d'effort de serrage tant que le piston 19 ne se serait pas retrouvé en appui sur ses butées mécaniques.

Dans le cas du fonctionnement du système de freinage selon l'invention muni de clapet 36, le système à piston électrique 27 est actionné, de sorte que la noix 27.1 est déplacée vers la plaquette 16.2 jusqu'à entrer en appui contre l'épaulement 29.2 et exercer un effort sur le piston hydraulique 19 s'ajoutant à l'effort du piston 19 sur le disque 24 dû à la pression hydraulique résultant éventuellement d'une action du conducteur sur la pédale de frein 2. L'effort de freinage des plaquettes 16.1, 16.2 sur le disque 24 est alors créé (si le conducteur n'appuie pas sur la pédale) ou augmenté.

L'électrovanne d'isolement 8.2 n'est pas activée et permet au fluide de remplir la chambre 17 du piston 19, de sorte que, si le conducteur appuie sur la pédale 1 de frein, la pression qu'il génère grâce au maître-cylindre 3 produit un effort sur le piston 19 hydraulique et augmente l'effort de serrage du disque 24.

L'utilisation des clapets 36 dans le système de freinage selon l'invention permet de donner une priorité au desserrage des éléments de frein 32 lors des phases de diminution du couple de freinage (lorsque les électrovannes 8.1, 8.2 sont activées), ce qui est sécurisant pour le conducteur du véhicule.

La figure 6 montre une variante applicable à tous les modes de réalisations décrits précédemment, dans laquelle l'électrovanne de pilotage normalement ouverte 5 est interposé entre le maître-cylindre 3 et les clapets 10, 36 du circuit d'admission de sorte que le circuit de freinage est distinct du circuit de défreinage. Les clapets 10, 36 sont reliés à l'électrovanne 5 sans liaison avec le clapet 6.

Bien entendu, dans le cas de la forme de réalisation du système d'étrier motorisé n'utilisant pas de clapet 36, la variante est applicable en conservant le clapet 36 et en le plaçant en amont de l'électrovanne d'admission 8.2.

Le principe de fonctionnement de cette variante est le suivant, lorsque le conducteur appuie sur la pédale 1, la pression est transmise à travers le clapet 6 et les électrovannes d'admission normalement ouverte 8.1, 8.2 aux étriers conventionnel 9 et motorisé 32, ces éléments constituant ainsi le circuit de freinage.

Lors de la phase de défreinage, le fluide contenu sous pression dans les étriers 9, 32 retourne au maître cylindre à travers les clapets 10, 36 et l'électrovanne normalement ouverte 5, ces éléments constituant ainsi le circuit de défreinage.

Le principe de fonctionnement d'un tel système selon ce mode de réalisation est similaire à celui précédemment décrit en ce qui concerne la phase de régulation du freinage pour contrôler la trajectoire ou la stabilité du véhicule mettant en oeuvre le procédé d'ESC ainsi que la phase d'anti-blocage des roues.

Dans cette variante de réalisation de l'invention, afin de protéger la pompe 7 et le circuit du freinage des surpressions lorsque la pompe 7 est activée en même temps que les électrovannes d'admissions 8.1, 8.2 du circuit d'admission et d'échappement, le système peut également comporter un limiteur de pression 30 monté en parallèle de la pompe.

Ce limiteur de pression peut être remplacé par un programme permettant de commander la pompe de manière à éviter les surpressions dans le circuit de freinage, ou combiné avec ce programme de commande pour contrôler la surpression.

## Revendications

1. Système de freinage pour véhicule automobile, comprenant :
- au moins un circuit (35) d'admission et d'échappement de liquide de frein relié à un élément de frein (9, 14) situé au niveau des roues ;
- une pédale de frein (1) et un maître-cylindre (3) muni d'un réservoir (13) de liquide de frein relié à ladite pédale, ledit maître-cylindre étant apte à transformer l'appui sur la pédale (1) de frein en une pression hydraulique transmise à des éléments de frein (9, 32) comportant des moyens hydrauliques (15, 17, 19) pour transformer la pression hydraulique en un couple de freinage ;
- un système de régulation du freinage, commandé par une unité de contrôle électronique installée dans le véhicule pour générer, augmenter ou diminuer le couple de freinage de chacune des roues indépendamment de l'action sur la pédale de frein (1) quelque soit la vitesse d'évolution du véhicule,
**caractérisé en ce que** le système de régulation du freinage comporte :
- des moyens hydrauliques pour réguler la pression du fluide de freinage ;
- un système d'étrier motorisé installé sur au moins une paire de roues comportant des moyens électriques (22, 27) pour réguler l'effort de freinage ; lesdits moyens hydrauliques de régulation de la pression et ledit système d'étrier motorisé étant destinés à être mis en oeuvre de manière conjointe pour générer, augmenter ou diminuer le couple de freinage de chacune des roues.

2. Système de freinage selon la revendication 1, **caractérisé en ce que** lesdits moyens hydrauliques pour réguler la pression du liquide de frein comportent :
- une pompe hydraulique (7), comportant une entrée de liquide de frein (701) reliée directement au maître cylindre (3) permettant de prélever du liquide de frein lors de son activation et une sortie de liquide de frein (702) reliée au circuit d'admission et d'échappement ;
- une électrovanne (5) de pilotage normalement ouverte connectée entre le maitre-cylindre (3) et le circuit d'admission et d'échappement de liquide de frein ;
- des électrovannes d'admission (8.1, 8.2) normalement ouvertes, connectées entre le maître-cylindre et les éléments de frein (9, 32),
- des clapets (10) montés en parallèle des électrovannes d'admission normalement ouvertes connectées entre le maître-cylindre et les éléments de frein comportant uniquement des moyens hydraulique (15, 17, 19), lesdits clapets (10) autorisant le passage du fluide uniquement des éléments de frein vers le maître-cylindre ;
- un accumulateur basse pression redimensionné (31) connectée entre une électrovanne d'échappement (11) normalement fermée et le maître-cylindre (3).

3. Système de freinage selon la revendication 1 ou 2, **caractérisé en ce que** le système d'étrier motorisé comporte un corps solidaire (15) d'une plaquette de frein (16.1) et au moins une chambre (17) remplie de fluide hydraulique, un piston hydraulique (19) creux étant installé à l'intérieur de ladite chambre, un système (22) de piston électrique étant installé à l'intérieur du creux du piston, ce système (22) de piston électrique comportant un piston électrique (22.1) associé à un moteur électrique (22.2), une extrémité du piston électrique (22.1) étant positionnée en regard d'une deuxième plaquette (16.2), les deux plaquettes (16.1, 16.2) étant positionnées de part et d'autre d'un disque (24) associé à une roue du véhicule.

4. Système de freinage selon la revendication 1 ou 2, **caractérisé en ce que** le système d'étrier motorisé comporte un corps (15) présentant au moins deux chambres (17.1, 17.2) ménagées de part et d'autre d'un disque (24) associé à une roue du véhicule, un piston hydraulique (19) étant installé dans une des chambres (17.1) remplie de fluide hydraulique, une extrémité de ce piston hydraulique (19) étant positionnée en regard d'une première plaquette (16.2), un système (22) à piston électrique comportant un piston électrique (22.1) associé à un moteur électrique (22.2) étant installé à l'intérieur de l'autre chambre (17.2), une extrémité du piston électrique (22.1) étant positionnée en regard d'une deuxième plaquette (16.1), les deux plaquettes (16.1, 16.2) étant positionnées de part et d'autre du disque (24).

5. Système de freinage selon la revendication 1 ou 2, **caractérisé en ce qu'**il comporte en outre des clapets (36) montés en parallèle des électrovannes d'admission normalement ouvertes (8.2) connectées entre le maître-cylindre (3) et les éléments de frein (14) muni d'un système d'étrier motorisé,
- le système d'étrier motorisé comportant un corps (15) solidaire d'une première plaquette (16.1), ce corps (15) présentant au moins une chambre (17) remplie de fluide hydraulique à l'intérieur de laquelle est disposé un piston hydraulique (19) creux, ce piston hydraulique présentant une extrémité positionnée en regard d'une deuxième plaquette (16.2), un système (27) à piston électrique étant installé à l'intérieur du creux du piston, ce système (27) à piston électrique comportant une noix (27.1) coopérant avec une tige (27.2) hélicoïdale entraînée en rotation par un moteur électrique (27.3), la noix (27.1) étant apte à éloigner ou approcher le piston hydraulique (19) du disque (24) disposé entre les plaquettes (16.1, 16.2).

6. Système de freinage selon la revendication 5, **caractérisé en ce que** le piston creux (19) présente un premier épaulement (29.1) ménagé du côté du corps (15) et un deuxième épaulement (29.2) ménagé du côté de la deuxième plaquette (16.2), les jeux (j1, j2) existant entre la noix (27.1) et les épaulements (29.1, 29.2) étant tels qu'ils permettent un fonctionnement sans que le moteur électrique (27.3) n'interfère avec le fonctionnement hydraulique du système de freinage (1).

7. Système de freinage selon la revendication 6, **caractérisé en ce que** le jeu (j1) entre la noix (27.1) et le premier épaulement (29.1) correspond à la course maximale du piston (19) hydraulique lors d'un freinage sans action du système (27) à piston électrique, le jeu (j2) entre la noix (27.1) et le deuxième épaulement (29.1) correspondant à un retour suffisant de la noix (27.1) suite à la création ou à l'augmentation d'un couple de freinage grâce au système électrique (utilisation de la fonction frein de parking électrique par exemple) garantissant qu'il n'y aura pas d'effort de freinage résiduel.

8. Système de freinage selon l'une des revendications 1 à 7, **caractérisé en ce que** l'électrovanne de pilotage normale ouverte (5) est interposé entre le maître-cylindre (3) et l'entrée du circuit d'admission, de sorte que lors du freinage et du défreinage, le liquide de frein traverse un même circuit.

9. Système de freinage selon l'une des revendications 1, 2, ou 5 à 7,
**caractérisé en ce que** l'électrovanne de pilotage normalement ouverte (5) est interposée entre le maître-cylindre (3) et des clapets (10, 36) autorisant le passage du fluide uniquement des éléments de frein (9, 32) vers le maître-cylindre (3) de manière à former un circuit de freinage distinct du circuit de défreinage.

10. Système de freinage selon l'une des revendications 1 à 4, **caractérisé en ce qu'**il comporte des en outre des clapets (36) montés en amont des électrovannes normalement ouvertes connectées à un système d'étrier motorisé (32), l'électrovanne de pilotage (5) étant interposé entre le maître-cylindre et des clapets (10, 36) de manière à former un circuit de freinage distinct du circuit de défreinage.

11. Procédé d'utilisation du système de freinage défini selon l'une des revendications 1 à 10, **caractérisé en ce que** on utilise de manière conjointe les moyens hydrauliques de régulation des pression et le système d'étrier motorisé pour créer, augmenter ou diminuer le couple de freinage de chacune des roues indépendamment de l'action sur la pédale de frein quelle que soit la vitesse d'évolution du véhicule.

12. Procédé selon la revendication 11, **caractérisé en ce que**, pour diminuer le couple de freinage généré par un élément de frein (32) muni d'un système d'étrier motorisé dans le système de freinage défini selon la revendication 3 ou 4,
- on isole la chambre (17, 17.1) de l'élément de frein (32) dans laquelle on souhaite diminuer la pression en activant l'électrovanne (8.2) d'admission normalement ouverte associée à cet étrier, et
- on active le système (22) à piston électrique de cet élément de frein (32) de manière à augmenter le volume de la chambre (17, 17.1) remplie de fluide hydraulique.

13. Procédé selon la revendication 11 ou 12, **caractérisé en ce que,** pour générer ou augmenter le couple de freinage généré par un élément de frein (32) muni d'un système d'étrier motorisé dans le système de freinage défini selon la revendication 3 ou 4,
- on isole la chambre (17, 17.1) de l'élément de frein (32) dans laquelle on souhaite augmenter la pression en activant l'électrovanne d'admission (8.2) normalement ouverte associée à cet étrier, et
- on active le système (22) à piston électrique de cet élément de frein (32) de manière à diminuer le volume de la chambre (17, 17.1) remplie de fluide hydraulique.

14. Procédé selon la revendication 13, **caractérisé en ce que** si le conducteur appuie sur la pédale de frein (1) et que si la pression dans le circuit hydraulique est supérieure à la pression générée par le piston hydraulique (19) dans la chambre (17 ou 17.1) isolée, l'électrovanne (8.2) d'admission ainsi que le système à piston électrique sont désactivés.

15. Procédé selon la revendication 11, **caractérisé en ce que**, pour diminuer le couple de freinage généré par un élément de frein muni d'un système d'étrier motorisé (32) dans le système de freinage défini selon les revendication 5 à 7,
- on isole la chambre (17) de l'élément de frein (32) dans laquelle on souhaite diminuer la pression en activant l'électrovanne d'admission (8.2) normalement ouverte associée à cet étrier, et
- on actionne le système (27) à piston électrique de cet élément de frein (5.1), de sorte que la noix (27.1) exerce un effort sur le piston hydraulique (19) s'opposant à l'effort du piston hydraulique (19) sur le disque (24) dû à la pression hydraulique.

16. Procédé selon la revendication 11 ou 15, **caractérisé en ce que**, pour créer ou augmenter le couple de freinage généré par un élément de frein (32) muni d'un système d'étrier motorisé dans le système de freinage défini selon les revendications 5 à 7,
- on actionne le système (27) à piston électrique de cet élément de frein (14), de sorte que la noix (27.1) exerce un effort sur le piston hydraulique (19) qui s'ajoute à l'effort du piston hydraulique (19) sur le disque (24) dû à la pression hydraulique.

17. Procédé selon la revendication 11, **caractérisé en ce que** pour diminuer le couple de freinage généré par un élément de frein (9) comportant uniquement des moyens hydrauliques dans le système de freinage défini selon la revendication 2,
- on active l'électrovanne (8.1) d'admission normalement ouverte, de sorte que ledit élément de frein (9) est isolé du circuit,
- on active l'électrovanne (11) d'échappement normalement fermée associée à cet élément de frein (9) de manière à ce que le fluide hydraulique évacue de l'élément de frein (9) et est recueilli dans l'accumulateur basse pression (31).

18. Procédé selon la revendication 11 ou 17, **caractérisé en ce que**, pour créer ou augmenter le couple de freinage généré par un élément de frein (9) comportant uniquement des moyens hydrauliques dans le système de freinage défini selon la revendication 2,
- on active l'électrovanne de pilotage (5) de manière à isoler le maître-cylindre du circuit de freinage,
- on active la pompe de manière à générer la pression requise.
